(19)

Europäisches
Patentamt
European
Patent Office
Office européen
des brevets

(11) **EP 4 190 464 A1**

(12) **EUROPEAN PATENT APPLICATION**
published in accordance with Art. 153(4) EPC

(43) Date of publication:
**07.06.2023 Bulletin 2023/23**

(21) Application number: **21832582.7**

(22) Date of filing: **30.06.2021**

(51) International Patent Classification (IPC):
*B22F 9/24* $^{(2006.01)}$  *B82Y 30/00* $^{(2011.01)}$
*B82Y 40/00* $^{(2011.01)}$  *B82Y 99/00* $^{(2011.01)}$
*H01B 5/00* $^{(2006.01)}$  *H01B 5/14* $^{(2006.01)}$
*H01B 13/00* $^{(2006.01)}$  *B22F 1/00* $^{(2022.01)}$

(52) Cooperative Patent Classification (CPC):
**B22F 1/00; B22F 9/24; B82Y 30/00; B82Y 40/00;
B82Y 99/00; H01B 5/00; H01B 5/14; H01B 13/00**

(86) International application number:
**PCT/JP2021/024656**

(87) International publication number:
**WO 2022/004762 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2020 JP 2020114364**

(71) Applicant: **Microwave Chemical Co., Ltd.
Osaka-shi, Osaka 559-0025 (JP)**

(72) Inventors:
• **YAMAUCHI, Tomohisa**
  **Osaka-shi, Osaka 559-0025 (JP)**
• **SAKAMOTO, Kei**
  **Osaka-shi, Osaka 559-0025 (JP)**

(74) Representative: **Dehns
St. Bride's House
10 Salisbury Square
London EC4Y 8JD (GB)**

(54) **METHOD FOR PRODUCING SILVER NANOWIRES**

(57)     Provided is, for example, a method for producing silver nanowires, the method being capable of easily producing thin silver nanowires.

A method for producing silver nanowires, the method including: a step of adding a raw material solution (A) including silver ions and a solvent (a) to a raw material solution (B) including halide ions and a solvent (b), the halide ions including substantially no chloride ions, and 97.0 mol% or more of the halide ions being bromide ions, so as to include a period where a value of (a rate of addition of the raw material solution (A) in terms of a rate of addition of silver ions [mol/min])/(an amount of halide ions in the raw material solution (B) [mol]) $\times$ 100 is 6.0 [min$^{-1}$] or less, thereby forming silver nanowires in an obtained mixed solution substantially containing no chloride ions.

EP 4 190 464 A1

**Description**

Technical Field

The present invention relates to, for example, a method for producing silver nanowires.

Background Art

A transparent conductive film is a thin film that combines visible light transmissivity with electrical conductivity and is widely used as a transparent electrode in, for example, a liquid crystal display, an electroluminescent display, a touch panel, and a solar cell. Above all, a sputtering film made of indium tin oxide (ITO) having high transparency and conductivity is widely used as a film sensor of a capacitive touch panel for small size applications with around 4 inches such as a smartphone, or for middle size applications with around 7 to 10 inches such as a tablet terminal.

In recent years, a low resistance is required as a characteristic of a transparent conductive film used in a large size touch panel for, for example, a large-sized product with 14 to 23 inches, such as a notebook PC and an all-in-one PC, and an electronic black board, but it is necessary to increase the thickness of ITO which is the electrically conductive layer to make an ITO film with a low resistance. Such a thick ITO film affects the visibility of the display, for example, the transparency of the film is reduced, and the risk that the pattern is seen after pattern formation is increased.

As substitutes for such an ITO film, transparent conductive films that are capable of being produced by a liquid phase method, combine a low resistance with transparency, and contain metal nanowires having flexibility have been examined. Above all, a transparent conductive film using silver nanowires is particularly attracting attention since it has high conductivity and stability. While ITO is one of ceramics and is very fragile, the malleability and ductility of silver are excellent among metals.

As a method for producing silver nanowires, a synthesis method using a polyol method by Xia et. al. is known (Patent Literature 1). It is reported that one-dimensional (1D) multi-twinned pentagonal silver nanowires are obtained by using a synthesis method in which polyvinylpyrrolidone is used as a surface modifier and heating, reduction, and crystal growth are performed in a state where silver is contained as a seed crystal in a solution containing polyol as a solvent and a reducing agent.

Citation List

Patent Literature

Patent Literature 1: U.S. Patent No. 7585349

Summary of Invention

Technical Problem

However, in a film using silver nanowires obtained by the method described in Patent Literature 1, an increase in haze due to high light reflection characteristics inherent in silver is considered to be observed, which is the factor causing a reduction in visibility, and as a means for suppressing that, miniaturization of the wire diameter is desired.

In view of such problems in the conventional art, an object of the present invention is to provide, for example, a new method for producing silver nanowires, the method being capable of producing thin silver nanowires.

Solution to Problem

The present inventors have intensively studied and found that, in a method for producing silver nanowires including a step of adding a solution containing silver ions to a solution containing halide ions and containing substantially no chloride ions to form silver nanowires, thin silver nanowires can be produced by supplying silver ions in very small portions (preferably by supplying silver ions in very small portions to produce silver halide crystals having a predetermined shape in the reaction solution in the early stage of the step, and then forming silver nanowires), thereby completing the present invention.

The present invention relates to, for example, the following [1] to [12].

[1] A method for producing silver nanowires, comprising:
a step of adding a raw material solution (A) including silver ions and a solvent (a) to a raw material solution (B) including halide ions and a solvent (b), the halide ions including substantially no chloride ions, so as to include a period where a value of (a rate of addition of the raw material solution (A) in terms of a rate of addition of silver ions [mol/min])/(an amount of halide ions in the raw material solution (B) [mol]) $\times$ 100 is 6.0 [min$^{-1}$] or less, thereby forming silver nanowires in an obtained mixed solution substantially containing no chloride ions.

[2] The method for producing silver nanowires according to the above [1], wherein 90 mol% or more of the halide ions are bromide ions.

[3] The method for producing silver nanowires according to the above [2], wherein 97.0 mol% or more of the halide ions are bromide ions.

[4] The method for producing silver nanowires according to any one of the above [1] to [3], wherein a silver ion concentration in the mixed solution within 120 minutes from a start of addition of the raw material solution (A) is 2.5 mmol/kg or less.

[5] The method for producing silver nanowires according to any one of the above [1] to [4], wherein each of the solvent (a) and the solvent (b) is a polyol, and the polyol is at least one selected from the group consisting of ethylene glycol, propylene glycol, trimethylene glycol, and glycerin.

[6] The method for producing silver nanowires according to any one of the above [1] to [5], wherein the raw material solution (A) and/or the raw material solution (B) contains a polymer including a structural unit derived from N-vinylpyrrolidone.

[7] The method for producing silver nanowires according to any one of the above [1] to [6], wherein the silver ions are those dissociated from a silver compound in the solvent (a).

[8] The method for producing silver nanowires according to the above [7], wherein the silver compound is at least one selected from the group consisting of silver nitrate, silver hexafluorophosphate, silver tetrafluoroborate, silver carbonate, silver sulfate, silver acetate, and silver trifluoroacetate.

[9] The method for producing silver nanowires according to any one of the above [1] to [8], wherein the halide ions are those dissociated from a halide in the solvent (b).

[10] The method for producing silver nanowires according to the above [9], wherein the halide is at least one selected from the group consisting of a quaternary ammonium halide and a metal halide.

[11] Silver nanowires produced by the method according to any one of the above [1] to [10].

[12] A thin film comprising the silver nanowires according to the above [11], the thin film having a haze measured in accordance with JIS K7136 of 0.3% or less.

Advantageous Effects of Invention

According to, for example, the method for producing silver nanowires according to the present invention, thin silver nanowires can be easily produced.

Brief Description of Drawings

[Figure 1] Figure 1 illustrates absorption spectra of dispersions containing silver nanowires, and shows the reaction temperature dependence depending on the type of silver nanoparticles produced.

[Figure 2] Figure 2 is FE-SEM images of the crystals produced in the early stage of a reaction in Example 1, Comparative Example 4-1, and Test Example 1.

[Figure 3] Figure 3 is FE-SEM images of the crystals produced in the early stage of a reaction in Example 1 and Example 2-1.

[Figure 4] Figure 4 illustrates absorption spectra of the mixed solutions or the dispersions containing silver nanowires in Examples 1, 2-4, and 3-4, and shows the change with time.

[Figure 5] Figure 5 illustrates a relation between the haze and the average wire diameter of the COP film attached with a silver nanowire thin film produced in Example 5.

Description of Embodiments

Hereinafter, the embodiment of the present invention will be described further in detail.

[Method for producing silver nanowires]

The method for producing silver nanowires according to one embodiment of the present invention includes:
a step of adding a raw material solution (A) including silver ions and a solvent (a) to a raw material solution (B) including halide ions and a solvent (b), the halide ions including substantially no chloride ions, at a predetermined rate, thereby forming silver nanowires in an obtained mixed solution substantially containing no chloride ions.

<Raw material solution (A)>

The raw material solution (A) includes silver ions and the solvent (a).

<<Silver compound>>

Silver ions are usually those dissociated from a silver compound in the solvent (a).

Examples of the silver compound, that is, a compound that dissociates silver ions in the solvent (a) include silver nitrate ($AgNO_3$), silver hexafluorophosphate ($AgPF_6$), silver tetrafluoroborate ($AgBF_4$), silver carbonate ($Ag_2CO_3$), silver sulfate ($Ag_2SO_4$), silver acetate ($CH_3COOAg$), and silver trifluoroacetate ($CF_3COOAg$), and among these, silver nitrate is preferable. The silver compound may be used alone or in combination of two or more.

<<Solvent (a) >>

Examples of the solvent (a) include polyols, specifically dihydric alcohols such as ethylene glycol, propylene glycol (1,2-propanediol), trimethylene glycol (1,3-propanediol), tetraethylene glycol, polyethylene glycol, diethylene glycol, triethylene glycol, polypropylene glycol, 1,2-butanediol, 1,3-butanediol, 1,4-butanediol, and 2,3-butanediol, and trihydric alcohols such as glycerin. Among these, ethylene glycol, propylene glycol, trimethylene glycol, and glycerin are preferable because of excellent reactivity, and ethylene glycol, propylene glycol, and trimethylene glycol are more preferable because of not too high viscosity.

Examples of the solvent (a) (having an action equivalent to that of the polyol as a solvent and a reducing auxiliary agent) include, in addition to polyols, aromatic alcohols such as benzyl alcohol and furfuryl alcohol, and aliphatic alcohols such as octanol, decanol, and oleyl alcohol. These may be used in combination with a polyol or alone.

The solvent (a) may be used alone or in combination of two or more. Among these, the solvent (a) is preferably a polyol which is a hydrophilic solvent, from the viewpoint of the solubility of the silver compound.

<<Surface modifier>>

The raw material solution (A) may contain a surface modifier that is adhered to side surfaces of growing silver nanowires, thereby promoting the growth of silver nanowires in the one-dimensional direction.

Examples of the surface modifier include a polymer including a structural unit derived from N-vinylpyrrolidone (hereinafter, referred to as a "vinylpyrrolidone polymer"). Examples of the vinylpyrrolidone polymer include poly N-vinylpyrrolidone (hereinafter, referred to as "PVP") and a copolymer of N-vinylpyrrolidone and vinyl acetate, and among these, PVP is preferable.

The weight average molecular weight of the vinylpyrrolidone polymer is preferably 5,000 to 1,500,000, more preferably 100,000 to 1,500,000, and further preferably 300,000 to 1,200,000. The weight average molecular weight can be measured by the method described in [0039] of WO2017/57326.

<Raw material solution (B)>

The raw material solution (B) includes halide ions and a solvent (hereinafter, the solvent contained in the raw material solution (B) is referred to as the "solvent (b)"), and the halide ions include substantially no chloride ions.

<<Halide>>

Halide ions are usually those dissociated from a halide in the solvent (b). Examples of halide ions include bromide ions and iodide ions.

Examples of the halide, that is, a compound that dissociates halide ions in the solvent (b) include a quaternary ammonium halide and a metal halide. Examples of the quaternary ammonium halide include quaternary ammonium bromides such as tetraalkylammonium bromide represented by the general formula $R^1R^2R^3R^4NBr$ (wherein $R^1$ to $R^4$ are each independently an alkyl group having, for example, 1 to 20, preferably 1 to 8, and more preferably 1 to 4 carbon atoms), and N-alkylpyridinium bromide, 1,3-dialkylimidazolium bromide, and tetraalkylphosphonium bromide (the number of carbon atoms of the alkyl group in these bromides is, for example, 1 to 20).

Examples of tetraalkylammonium bromide include tetramethylammonium bromide, tetraethylammonium bromide, tetrapropylammonium bromide, tetraisopropylammonium bromide, tetrabutylammonium bromide, tetrapentyl ammonium bromide, tetrahexylammonium bromide, tetraheptylammonium bromide, tetraoctylammonium bromide, hexadecyltrimethylammonium bromide, and methyltrioctylammonium bromide.

Examples of N-alkylpyridinium bromide include cetylpyridinium bromide.

Examples of 1,3-dialkylimidazolium bromide include 1-ethyl-3-methylimidazolium bromide.

Examples of tetraalkylphosphonium bromide include tetrabutylphosphonium bromide and tetraethylphosphonium bromide.

Further, examples of the quaternary ammonium halide include compounds in which bromide included in these quaternary ammonium bromides is replaced with iodine.

Examples of the metal halide include metal bromides such as alkali metal bromides, alkaline earth metal bromides, and bromides of metals of groups 3 to 14 in the periodic table.

Examples of alkali metal bromides include lithium bromide, sodium bromide, potassium bromide, and rubidium bromide.

Examples of alkaline earth metal bromides include magnesium bromide and calcium bromide.

As the bromides of metals of groups 3 to 14 in the periodic table include, bromides of metals other than noble metals (palladium, silver, platinum, and gold) are preferable, and examples thereof include aluminum bromide, tin bromide, manganese bromide, iron bromide, cobalt bromide, and nickel bromide.

Further, examples of the metal halide include compounds in which bromide included in these metal bromides is replaced with chlorine or iodine.

Among these, lithium bromide, sodium bromide, potassium bromide, tetramethylammonium bromide, tetraethylammonium bromide, tetrapropylammonium bromide, tetraisopropylammonium bromide, and tetrabutylammonium bromide are preferable as the halide, from the viewpoint of the solubility in the solvent to be used.

In the method for producing silver nanowires according to one embodiment of the present invention, the raw material solution (A) is added to the raw material solution (B), so that silver halide crystals in the shape of a pentagonal dipyramid and/or an elongated pentagonal dipyramid are produced in the obtained mixed solution preferably substantially containing no chloride ions, and then silver nanowires are formed.

Since silver halide crystals in the shape of a pentagonal dipyramid and/or an elongated pentagonal dipyramid are easily formed in the mixed solution obtained by adding the raw material solution (A) to the raw material solution (B), and the diameter of the formed silver nanowires can be reduced, the halide usually includes substantially no chlorides, and includes substantially only bromides. In the present invention, "the halide includes substantially no chlorides" means that the halide includes no chlorides at all, or the proportion of chlorides in the halide is preferably 10 mol% or less, more preferably 5 mol% or less, and further preferably 0.5 mol% or less. In the present invention, "the halide includes substantially only bromides" means that all the halide is bromide, or the proportion of the bromide in the halide is preferably 90 mol% or more, more preferably 95 mol% or more, and further preferably 99.5 mol% or more.

For the same reason, usually, halide ions in the raw material solution (B) include substantially no chloride ions, and includes substantially only bromide ions. In the present invention, "halide ions include substantially no chloride ions" means that halide ions includes no chloride ions at all, or the proportion of chloride ions in halide ions is preferably 10 mol% or less, more preferably 5 mol% or less, and further preferably 3.0 mol% or less. In the present invention, "halide ions include substantially only bromide ions" means that all the halide ions are bromide ions, or the proportion of bromide ions in halide ions is preferably 90 mol% or more, more preferably 95 mol% or more, and further preferably 97.0 mol% or more.

When halide ions include substantially no chloride ions and are bromide ions, a silver cluster made of 0 valent small Ag nuclei is more easily generated on the surface of AgBr having high covalent bonding properties to be produced, as compared with the surface of AgCl. Since silver nanowires grow from small nuclei as starting points, thin silver nanowires are presumed to be produced.

<<Solvent (b) >>

As the solvent (b), a solvent that serves as a reducing agent for silver ions is used, and for example, specific examples and preferred aspects thereof are the same as the above-mentioned solvent (a). The solvent (b) is preferably a polyol. The polyol as the solvent (b) may be the same as or different from the polyol as the solvent (a).

«Surface modifier>>

The raw material solution (B) may contain a surface modifier. The detail of the surface modifier is as mentioned above. The surface modifier is preferably contained in the raw material solution (A) and/or the raw material solution (B) .

<Addition of raw material solution (A) to raw material solution (B)>

The production method according to one embodiment of the present invention includes a step of adding the raw material solution (A) to the raw material solution (B), and in the early stage of this step, the production method preferably allows silver halide crystals in the shape of a pentagonal dipyramid and/or an elongated pentagonal dipyramid to be produced in the obtained mixed solution, and then allows silver nanowires to be formed.

The production of silver halide crystals in the above shape can be confirmed by collecting a measurement sample from the obtained mixed solution and measuring the composition and the shape of the crystals included in the measurement sample, in the early stage of the step, for example, in the stage where the raw material solution (A) has been added to the raw material solution (B) in an amount corresponding to 1.1 equivalents of silver ions relative to halide ions in the raw material solution (B) (1.1 mol of silver ions per 1 mol of halide ions).

Examples of the method for measuring the composition and the shape of the crystals included in the measurement sample include the following methods.

(Method for measuring composition and shape of crystals)

The measurement sample is held at the reaction temperature for 30 minutes, and then diluted to 10 times with methanol. The obtained diluted solution is centrifuged, the supernatant is removed, and then the obtained precipitate is redispersed in the same amount of methanol as the above methanol. The obtained redispersion liquid is added dropwise on a silicon wafer substrate and vacuum dried, thereby preparing a sample for field emission scanning electron microscope (FE-SEM) observation.

Using FE-SEM (e.g., manufactured by Hitachi High-Technologies Corporation, SU8000), the shape of the crystals contained in the observation sample is observed under the conditions of an accelerating voltage of 15 kV, WD of 15 mm, and a magnification of 5,000 to 20,000 times.

This observation is performed at randomly selected 10 places on the sample for FE-SEM observation, and when a pentagonal dipyramidal crystal and/or an elongated pentagonal dipyramidal crystal is present at any of 10 places, the pentagonal dipyramidal crystal and/or the elongated pentagonal dipyramidal crystal is determined to be produced in the step.

The pentagonal dipyramid refers to a shape in which two pentagonal pyramids are bonded together by overlapping their bottom surfaces, and the elongated pentagonal dipyramid refers to a shape in which two pentagonal pyramids are bonded together by overlapping their bottom surfaces through a pentagonal prism.

Further, the crystals are subjected to a point analysis using an energy dispersive X-ray analyzer equipped with FE-SEM, thereby confirming the composition of the crystal and the charge of silver. When halogen/Ag is 1.0 in the atomic ratio and silver is univalent, the crystal is determined to be a silver halide crystal.

<<Silver ion concentration>>

In the early stage of the step of adding the raw material solution (A) to the raw material solution (B), the silver ion concentration in the obtained mixed solution usually increases and then decreases. The reason for the decrease in the silver ion concentration is considered that the silver ions supplied from the raw material solution (A) are consumed for the formation of silver nanowires.

The silver ion concentration in the mixed solution in the early stage of the step, for example, within 120 minutes from the start of addition of the raw material solution (A) is preferably 2.5 mmol/kg or less, more preferably 2.0 mmol/kg or less, and further preferably 1.5 mmol/kg or less.

The lower limit value of the silver ion concentration is not particularly limited, but may be, for example, 0.1 mmol/kg from the viewpoint of preventing the formation of silver nanowires from excessively delaying.

The silver ion concentration can be measured by potentiometry with a silver electrode, in which a measurement sample is collected from the mixed solution once every 15 to 30 minutes (the amount of the measurement sample collected per one collection is set to the amount 1/400 or less of the amount of the mixed solution upon collection).

The silver ion concentration can be lowered by means such as reducing the rate of dropwise addition of the raw material solution (A) and increasing the reaction temperature mentioned below.

<<Ag/Halogen increasing rate, rate of dropwise addition of raw material solution (A)>>

Further, the raw material solution (A) is gradually added to the raw material solution (B), and specifically, it is added such that the value of (a rate of addition of the raw material solution (A) in terms of a rate of addition of silver ions [mol/min])/(an amount of halide ions in the raw material solution (B) [mol]) $\times$ 100 (hereinafter, also referred to as "Ag/halogen increasing rate") becomes 6.0 [min$^{-1}$] or less, and preferably 4.0 [min$^{-1}$] or less. The "rate of addition of the raw material solution (A) (or) silver ions" is obtained by dividing the amount of the raw material solution (A) (or silver ions) to be added by the time from the start of addition to the end of addition of the total amount.

The addition of the raw material solution (A) may be performed continuously or intermittently, but is preferably performed continuously, from the viewpoint of suppressing rapid variations of the concentration of each component in the mixed solution.

The rate of dropwise addition (rate of addition) of the raw material solution (A) may be changed in a dropwise addition period in three stages. Specifically, the raw material solution (A) is added dropwise at the first rate which is the fastest in the three stages over a predetermined time from the start of dropwise addition, subsequently added dropwise at the second rate which is slower than the first rate over a predetermined time, and further added dropwise at the third rate which is slower than the first rate and faster than the second rate over a predetermined time. Thinning is facilitated by adding the raw material solution (A) dropwise at the first rate which is the fastest, in the early stage of dropwise addition. This is considered because an acceleration of the rate in the early stage of dropwise addition allows small nuclei of a silver halide or silver to be produced. In addition, by adding the raw material solution (A) dropwise at the second rate which is slower than the first rate, the improvement of the yield is facilitated. Further, by adding the raw material solution (A) dropwise at the third rate which is faster than the second rate in the closing stage of the reaction, the reaction time can be shortened without influencing thinning and the yield.

The time for dropwise addition at the first rate is preferably shorter than the time for dropwise addition at the second rate, from the viewpoint of thinning. The time for dropwise addition at the first rate is more preferably shorter than 1/5, and further preferably shorter than 1/10 of the time for dropwise addition at the second rate.

In any of the first rate, the second rate, and the third rate during the dropwise addition period, the Ag/halogen increasing rate is preferably 6.0 $[min^{-1}]$ or less, and further preferably 4.0 $[min^{-1}]$ or less. In all of the first rate, the second rate, and the third rate, the Ag/halogen increasing rate may be 6.0 $[min^{-1}]$ or less, or may be 4.0 $[min^{-1}]$ or less.

<u><<Chloride ion>></u>

Since silver halide crystals in the shape of a pentagonal dipyramid and/or an elongated pentagonal dipyramid are easily produced in the mixed solution and the diameter of the silver nanowires to be formed is easily reduced, the mixed solution contains substantially no chloride ions. In the present invention, "the mixed solution contains substantially no chloride ions" means that the mixed solution does not contain any chloride ions at all, or the amount of chloride ions in the mixed solution is preferably 5% by mass or less, and more preferably 2% by mass or less of the amount of bromide ions. The amounts of chloride ions and bromide ions can be quantified by a method employed in Examples mentioned below.

<u><<Various conditions>></u>

The temperature of the raw material solution (A) is preferably around room temperature (e.g., 20 to 30°C), from the viewpoint of easy handling and suppressing the reduction of silver ions.

On the other hand, the temperature of the raw material solution (B) and the mixed solution obtained by adding the raw material solution (A) to the raw material solution (B) (hereinafter, also referred to as "the reaction temperature") is preferably 110°C or more and less than the boiling point of the solvent of the mixed solution, more preferably 145 to 175°C, and further preferably 150 to 160°C.

The temperature of the mixed solution may be held in the above range also after the end of addition of the raw material solution (A). The holding time is, for example, 0 to 12 hours, and preferably 30 minutes to 2 hours. According to the production method according to one embodiment of the present invention, thin silver nanowires can be produced with a high yield even when the holding time varies, and there is no need to strictly control the holding time.

To obtain silver nanowires having a uniform size, it is preferable to proceed the reduction of silver ions, nucleation, nuclear growth, and wire growth uniformly in the whole mixed solution. Hence, the mixed solution is preferably heated such that the temperature of the whole mixed solution is uniformly kept. Examples of the means for achieving a uniform temperature of the whole mixed solution include uniform heating by microwave irradiation.

The time required for the addition of the raw material solution (A) to the raw material solution (B) is appropriately set depending on the amount and the concentration of each solution such that the silver ion concentration in the mixed solution is preferably maintained in a predetermined range and the Ag/halogen increasing rate is in a predetermined range.

The addition of the raw material solution (A) to the raw material solution (B) is preferably performed under an inert gas (e.g., nitrogen gas) atmosphere.

The mixed solution may be prepared by adding only the raw material solution (A) to the raw material solution (B), or may be prepared by adding not only the raw material solution (A) but also other components to the raw material solution (B).

Examples of other components include surface modifiers or solutions thereof. In addition, other components contain substantially no chloride ions. In the present invention, "other components contain substantially no chloride ions" means that other components do not contain any chloride ions at all, or the amount of chloride ions in other components is preferably 10 ppm by mass or less, and more preferably 3 ppm by mass or less.

(Silver halide crystal)

In the early stage in which the raw material solution (A) containing silver ions is added dropwise to the raw material solution (B) containing halide ions, a small amount of silver ions are immediately bonded (ionic bonded) to halide ions to produce silver halide crystals. Further, when a large amount of silver ions are supplied in the system, silver ions are reduced, so that silver clusters are generated aside from the silver halide crystals.

As the production mechanism of silver nanowires, it is generally said that the reduction of silver ions produces nanocrystals of regular tetrahedron $Ag^0$ (each plane is the (111) plane), these nanocrystals are connected to form multi-twinned decahedrons which are nuclei of nanowires (hereinafter, also referred to as "$Ag^0$ nucleus"), and extension to rods or wires proceed through their growth. However, it is not necessarily clear where in the reaction system multi-twinned decahedrons are formed.

As mentioned above, in the method for producing silver nanowires including a step of adding a solution containing silver ions to a solution containing halide ions to form silver nanowires, thin silver nanowires can be produced by supplying silver ions in very small portions. This reason can be presumed as follows.

Upon generation of $Ag^0$ nuclei in the above-mentioned mixed solution, precipitation on the surface of silver halide crystals is energetically more stable than precipitation of $Ag^0$ nuclei in the liquid phase. Thus, it is considered that $Ag^0$ nuclei are produced on the surfaces of silver halide crystals, and silver wires grow from $Ag^0$ nuclei as starting points.

When the shape of silver halide crystals is cubic, this shape is a truncated cube in a detailed observation, that is, 6 planes of the cube are (100) planes, and further, 8 vertexes of the cube are easily scraped (that is, this crystal is a truncated cube), and (111) planes appear on the scraped vertexes. It is considered that, since these (111) planes are small, the above-mentioned silver cluster is accumulated thereon, so that thick silver nanowires grow.

On the other hand, in the method for producing silver nanowires including a step of adding a solution containing silver ions to a solution containing halide ions to form silver nanowires, silver halide crystals preferably in the shape of a pentagonal dipyramid and/or an elongated pentagonal dipyramid can be produced in the reaction solution by supplying silver ions in very small portions. In the case of the silver halide crystals in the shape of a pentagonal dipyramid and/or an elongated pentagonal dipyramid, the plane of the pentagonal pyramid is the (111) plane. It is inferred that, since the silver halide crystals in the shape of a pentagonal dipyramid and/or an elongated pentagonal dipyramid have large (111) planes, intended regular tetrahedron $Ag^0$ nuclei are easily produced, so that thin silver nanowires can be grown.

By further optimizing the synthesis conditions in the production method according to one embodiment of the present invention, silver nanowires can be produced while suppressing the production of a side product such as spherical particles. This can be evaluated by measuring the ultraviolet visible absorption spectrum of the silver nanowires obtained by the production method according to one embodiment of the present invention.

Specifically, silver nanowires have an absorption maximum ($\lambda_{max}$) around the wavelength of 370 nm and the absorbance thereof is defined as Abs ($\lambda_{max}$), and since the plasmon absorption band of silver nanoparticles which are spherical particles shifts from 400 nm to 500 nm according to an increase in the particle diameter, the intensity derived from spherical particles is defined as the absorbance Abs (450 nm) at the wavelength of 450 nm, and thus, the amount of spherical particles as foreign matter can be evaluated using an absorption evaluation value represented by the following expression.

$$\texttt{Absorption evaluation value = Abs (450 nm)/Abs (}\lambda_{\texttt{max}}\texttt{)}$$

A small absorption evaluation value means that the presence ratio of silver nanowires is high and the amount of spherical silver nanoparticle foreign matter present is small.

For the silver nanowires obtained by the production method according to one embodiment of the present invention, measurement samples are prepared under the conditions employed in Examples mentioned below, and the absorption evaluation value measured is, for example, 0.9 or less, and preferably 0.6 or less, and the lower limit value thereof may be, for example, 0.3.

According to the production method according to one embodiment of the present invention, silver nanowires can be obtained as a dispersion of silver nanowires. The silver nanowires in the dispersion may be subjected to, for example, washing, redispersion, and isolation by conventionally known methods.

[Silver nanowires]

The silver nanowires according to one embodiment of the present invention are the silver nanowires produced by the method for producing silver nanowires according to one embodiment of the present invention mentioned above.

The average diameter of the silver nanowires according to one embodiment of the present invention measured by the method employed in Examples mentioned below is preferably 10 to 17 nm, and more preferably 13 to 16 nm. An average diameter of the lower limit value or more is preferable from the viewpoint of prevention of breaking of the silver nanowires in, for example, the production process of a transparent conductive film or chemical stability. An average diameter of the upper limit value or less is preferable from the viewpoint of allowing the haze of a transparent conductive film produced by using the silver nanowires to be reduced.

The average length of the silver nanowires according to one embodiment of the present invention measured by the method employed in Examples mentioned below is preferably 3 to 50 um.

When the silver nanowires according to one embodiment of the present invention are subjected to elemental analysis by the method employed in Examples mentioned below, chlorine is not detected.

[Application of silver nanowires]

The silver nanowires produced by the production method according to one embodiment of the present invention can be used as, for example, a dispersion containing silver nanowires. This dispersion can be utilized as, for example, a coating liquid for forming a thin film, which is described next.

The silver nanowires produced by the production method according to one embodiment of the present invention can be processed into a thin film.

The thin film according to one embodiment of the present invention includes the silver nanowires according to one embodiment of the present invention, and the haze thereof measured in accordance with JIS K7136 is 0.3% or less.

Such a thin film can be utilized as, for example, a transparent conductive film. This transparent conductive film can be utilized in, for example, touch panels, touch sensors, and solar cells.

All of these can be produced by a conventionally known method, except that the above-mentioned silver nanowires produced by the production method according to one embodiment of the present invention are used as silver nanowires.

Silver is a substance that easily reflects light. The natural light irradiated on silver is reflected as it is, and reflected in the eyes as all colors of visible light (white). Thus, when a silver nanowire thin film is used, there is a problem in that whitishness is significantly visible with the backlight OFF, that is, on a black screen. Since bulk silver reflects almost 100% of the light of 700 to 400 nm in the entire region of the visible light, it looks white in which all the colors of visible light are mixed.

Since light is one of electromagnetic waves, it propagates while the electric field and the magnetic field are oscillating, like television and radio waves. When light enters the inside of a metal, an oscillating electric field is created in the metal. When a light electric field tries to enter the inside of the metal from the outside, reverse electric polarization occurs, which shields the electric field, so that the light cannot enter the inside of the metal. In other words, all the light is reflected by the metal.

When the crystal size is smaller than the wavelength of light, the influence of Rayleigh scattering appears significantly. The scattering intensity is proportional to 6 power of the diameter d, and thus, when the wire diameter is made small, the scattering intensity, that is, whiteness is dramatically improved.

The conductivity of the transparent conductive film formed by coating silver nanowires on a support depends on the amount of silver per unit volume. On the other hand, the transparency of the formed transparent conductive film is inversely proportional to the thickness of the silver nanowire layer, that is, the wire diameter of silver. By making the silver nanowire layer thin, that is, by making the wire diameter of silver thin, a silver nanowire thin film having a low reflectance can be obtained.

The silver nanowires produced by the production method of one embodiment of the present invention can be preferably used in, for example, plasmon antennas, molecular sensors, and nanocomposites, in addition to the above-mentioned applications.

Examples

Hereinafter, the embodiment of the present invention will be described in detail with reference to Examples, but these Examples are illustrative, and the present invention is not limited to these Examples.

<Measurement method and evaluation method>

(Mixed solution)

For example, in Examples, the measurement and evaluation of, for example, the mixed solution were carried out according to the following procedure.

[Silver ion concentration of mixed solution]

For example, in Examples, the silver ion concentration of the mixed solution was measured by the following method, and the maximum value of the silver ion concentration within 120 minutes from the start of addition of a silver nitrate solution was determined.

1 g of the mixed solution was sampled and diluted with distilled water to 50 g to prepare a measurement sample, and the silver ion concentration was measured using an automatic titrator AUT-301 manufactured by DKK-TOA Corporation by potentiometry using a silver electrode. Sampling was performed at a frequency of once every 15 to 30 minutes.

[Crystal in early stage of reaction]

The same operation as each Examples and Comparative Examples mentioned below was started, dropwise addition of the silver nitrate solution was ended when silver atom:halogen atom (molar ratio) = 1.1:1 was achieved in the reaction solution, and 3 mL was taken out from the solution that was held at the reaction temperature for 30 minutes after the end of dropwise addition. This solution was diluted 10 times with methanol, charged in a centrifugal container made of Teflon (R), and centrifuged in a centrifugal machine (manufactured by TOMY, CAX-371) under the rotation conditions of a rotation speed of 13,000 rpm (corresponding to 20,030 G) for 60 minutes, and then, the supernatant was removed. Thereafter, the obtained precipitate was redispersed with 3 mL of methanol. This purified methanol dispersion was added dropwise onto a silicon wafer substrate, and vacuum dried at 40°C. Randomly selected 10 places on the silicon wafer substrate were subjected to analysis under the following conditions.

Measurement apparatus: field emission scanning electron microscope (FE-SEM: manufactured by Hitachi High-Technologies Corporation, SU8000)
Measurement conditions: accelerating voltage of 15 kV, WD of 15 mm, magnification of 5,000 to 20,000 times

Specifically, the shape of crystals in the sample was observed by an FE-SEM image, and further, the crystals were subjected to point analysis using an energy dispersive X-ray analyzer equipped with FE-SEM, thereby confirming the composition and the charge of silver. When halogen/Ag was about 1.0 in the atomic ratio and silver was univalent, a silver halide crystal was determined to be formed.

Further, with respect to the purified methanol-diluted solution, diameters of silver nanowires (hereinafter, described as "average diameter of silver nanowires in the early stage of generation") were measured by TEM analysis under the following conditions.

Measurement apparatus: transmission electron microscope (TEM: manufactured by Hitachi High-Technologies Corporation, H800EDX)
Measurement conditions: accelerating voltage of 200 kV, magnification of 200,000 times

(Silver nanowires)

The measurement and evaluation of the silver nanowires produced in, for example, Examples were carried out according to the following procedure.

[Average wire diameter]

100 mL of acetone as a poor solvent was added to 10 mL of the synthetic liquid (silver nanowire dispersion), thereby allowing silver nanowires to settle out. After the precipitate from which the supernatant was removed was diluted and dispersed by adding 50 mL of methanol, the dispersion was charged in a centrifugal container made of Teflon (R), and centrifuged in a centrifugal machine (manufactured by TOMY, CAX-371) under the rotation conditions of a rotation speed of 3,000 rpm (corresponding to 1,000 G) for 60 minutes, and then, the supernatant was removed. Thereafter, the washing operation was performed by repeating an operation, in which the obtained slurry was redispersed with the same amount of methanol and centrifuged, for further 4 times, thereby removing the solvent (propylene glycol) and surface modifier (polyvinylpyrrolidone) present in excess amounts. The obtained purified methanol-diluted solution was added dropwise to an elastic carbon support membrane Cu grid (manufactured by Okenshoji Co., Ltd., ELS-C10), and vacuum dried at 40°C. The obtained sample was analyzed under the following conditions, the diameters of randomly selected 200 wires were measured, and the average value and standard deviation thereof were calculated.

Measurement apparatus: transmission electron microscope (TEM: manufactured by Hitachi High-Technologies Corporation, H800EDX)

Measurement conditions: accelerating voltage of 200 kV, magnification of 200,000 times

[Average wire length]

The above-mentioned purified methanol-diluted solution was added dropwise onto a silicon wafer substrate, and vacuum dried at 40°C. The obtained sample was analyzed under the following conditions, the lengths of randomly selected 200 wires were measured, and the average value and standard deviation thereof were calculated.

Measurement apparatus: scanning electron microscope (SEM: manufactured by JEOL Ltd., JSM-IT300)
Measurement conditions: accelerating voltage of 10 kV, WD of 10 mm, magnification of 1,500 times

[Amount of halogen]

The same operation as the above-mentioned process of preparing a purified methanol-diluted solution of silver nanowires for measuring the wire diameter was performed to prepare a purified methanol dispersion. 30 mL of the obtained methanol dispersion was put in a container made of Teflon (R) and dried in an explosion-proof dryer at 70°C for 4 hours to obtain a silver nanowire solid sample in film form. The amount of halogen contained in silver nanowires was analyzed under the following conditions. The above halogen is considered to be adsorbed on a side surface of a silver nanowire with PVP.
Measurement apparatus: organic elemental analysis system (manufactured by Nittoseiko Analytech Co., Ltd.)
Measurement method: horizontal sample combustion apparatus, ion chromatograph integrated type

[Amount of foreign matter (spherical particles)]

<<Measurement of visible absorption spectrum>>

Each silver nanowire dispersion obtained, for example, in Examples was diluted with isopropyl alcohol, and the obtained silver nanowire diluted dispersion was analyzed by the following measurement apparatus under the following apparatus conditions. Dilution was performed so that the absorbance does not exceed 1.0. The silver nanowire concentration is recommended to be 0.0025% by mass.
Measurement apparatus: UV-2400 PC spectrometer (manufactured by Shimadzu Corporation)

Apparatus conditions

Start: 900.00 nm
End: 300.00 nm
Scanning speed: 60 nm/min
Sampling distance: 1.00 nm
Slit: 0.2 nm
Cell length: 10.0 mm

<<Amount of foreign matter>>

The amount of foreign matter (spherical particles) contained in the silver nanowires immediately after production was evaluated by the following method based on the visible absorption spectrum measured by the above method.
Since the silver nanowires produced have an absorption maximum ($\lambda_{max}$) around the wavelength of 370 nm, the absorbance thereof was defined as Abs ($\lambda_{max}$) . Since the plasmon absorption band of silver nanoparticles which are spherical particles shifts from 400 nm to 500 nm according to an increase in the particle diameter, the intensity derived from spherical particles was defined as the absorbance Abs (450 nm) at the wavelength of 450 nm, and the amount of foreign matter was evaluated using the absorption evaluation value represented by the following expression.

$$\text{Absorption evaluation value} = \text{Abs (450 nm)}/\text{Abs } (\lambda_{max})$$

A large evaluation value means that the presence ratio of silver nanowires in the solution is small and the amount of spherical silver nanoparticle foreign matter present is large.

[Example 1]

(Preparation of silver nanowire dispersion)

3.0 g of silver nitrate (manufactured by Wako Pure Chemical Industries, Ltd.) was added to 89.0 g of propylene glycol (manufactured by Kishida Chemical Co., Ltd.) at room temperature while vigorously stirring for dissolution, thereby preparing a silver nitrate solution.

Using a reaction apparatus equipped with a stirrer with a seal stopper made of polytetrafluoroethylene (PTFE) (manufactured by TOKYO RIKAKIKAI CO, LTD., MAZELA Z2310), a glass container (round-bottom flask made of glass) with a volume of 1,000 mL having a nitrogen introduction pipe, a thermocouple insertion port, and a dropping port, and a halfmoon stirring blade made of PTFE as a stirring blade, silver nanowires were synthesized. The above reaction apparatus was incorporated into a multimode microwave irradiation apparatus (manufactured by Shikoku Instrumentation CO.,LTD., $\mu$-Reactor Ex; maximum output: 1,000 W, oscillation frequency: 2.45 GHz), and the entire solution was heated by microwave irradiation. The temperature control was performed by measuring the temperature in the solution with a thermocouple and program controlling the output of microwave radiation so that the measured temperature reaches a set temperature.

Specifically, 550 g of a propylene glycol solvent was added into the above 1,000 mL glass container and stirred at room temperature while adding 14.45 g of polyvinylpyrrolidone (weight average molecular weight: 800,000 to 1,000,000, manufactured by Wako Pure Chemical Industries, Ltd.) powder in portions for complete dissolution, thereby preparing a PVP solution. Thereafter, 76.8 g of a propylene glycol solution containing 0.5% by mass of tetrabutylammonium bromide (manufactured by Kishida Chemical Co., Ltd., special grade) (tetrabutylammonium bromide amount: 1.2 mmol) was added to the PVP solution and well-mixed, and then the inside of the container was replaced with nitrogen gas. The inside of the glass container was continuously held under an inert atmosphere by flowing nitrogen gas at 100 ml/min. First, the bromide solution in the glass container was warmed by microwave irradiation from room temperature to the reaction temperature (160°C) at a temperature rising rate of 8°C/min, and the temperature of the solution was held. The proportion of chloride ions in halide ions in the bromide solution was calculated based on the amount of chloride ions that may be contained in the raw material, and found to be 2.3 mol% or less.

To the above bromide solution, the silver nitrate solution at 25°C prepared as described above was added dropwise at a constant rate using a metering pump (manufactured by KNF, SIMDOS02) over 516 minutes. Table 1 shows, for example, the silver ion concentrations of the mixed solutions obtained by dropwise addition (the maximum value of the silver ion concentration within 120 minutes from the start of addition of the silver nitrate solution is described as silver ion concentration; the same applies hereinafter), the Ag/Br increasing rates, and the chloride ion concentrations (calculated from the amount of chloride ions that may be contained in the raw material). In the early stage of dropwise addition of the silver nitrate solution, silver bromide crystals in the shape of a pentagonal dipyramid or an elongated pentagonal dipyramid were formed.

After the end of dropwise addition, the temperature of the obtained solution was held at the reaction temperature (160°C) for further 1 hour (a part of the solution was held for 3 hours for the measurement of the absorption spectrum mentioned below). The obtained grey-green solution was cooled to room temperature to obtain an intended dispersion of silver nanowires. The size of the obtained silver nanowires was such that the average diameter was 13.7 nm (standard deviation $\sigma$ = 1.5 nm), and the average length was 10.5 $\mu$m ($\sigma$ = 4.0 pm). The absorption evaluation value was 0.558. Further, the amount of chlorine in the silver nanowires was a detection limit or less, and the amount of bromine was 2.61% by mass.

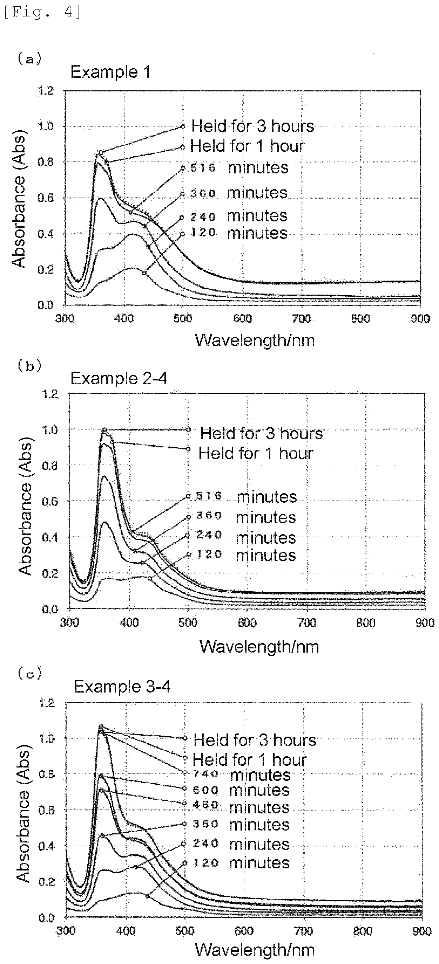

Figure 4(a) shows the absorption spectra of the mixed solutions (measured after 120 minutes, after 240 minutes, after 360 minutes, and after 516 minutes from the start of dropwise addition of the silver nitrate solution, and after 1 hour and 3 hours from the start of holding after the end of dropwise addition).

[Examples 2-1 to 2-4]

In Example 2-1, a silver nanowire dispersion was produced in the same manner as in Example 1, except that the reaction temperature was changed to 150°C.

In Example 2-2, a silver nanowire dispersion was produced in the same manner as in Example 1, except that the reaction temperature was changed to 155°C.

In Example 2-3, a silver nanowire dispersion was produced in the same manner as in Example 1, except that the reaction temperature was changed to 165°C.

In Example 2-4, a silver nanowire dispersion was produced in the same manner as in Example 1, except that the reaction temperature was changed to 170°C.

Table 1 shows, for example, the silver ion concentrations of the mixed solutions in Examples 2-1 to 2-4 and the evaluation results of the obtained silver nanowires.

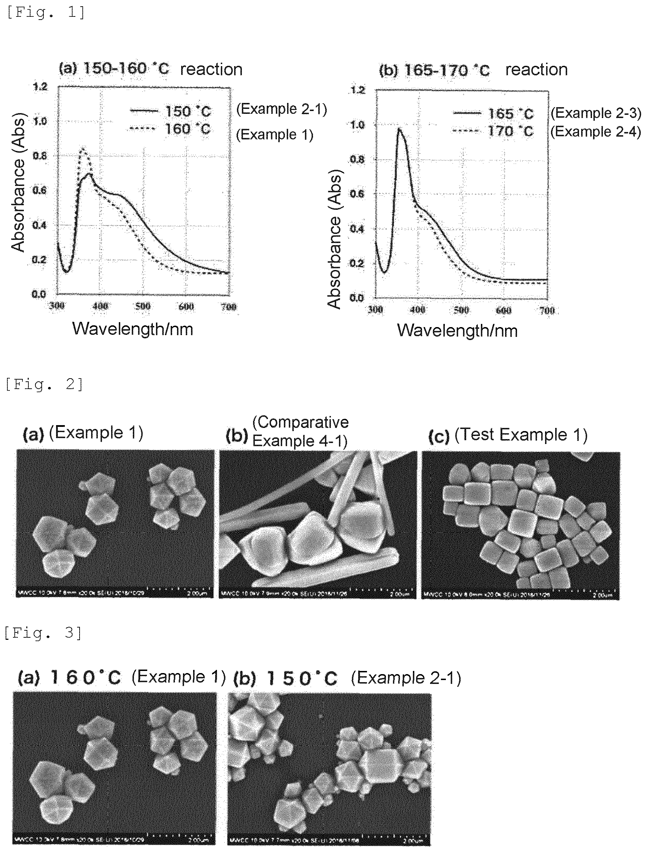

Further, Figure 1 shows the absorption spectra of the dispersions obtained by diluting the silver nanowire dispersions obtained in Examples 2-1, 1, 2-3, and 2-4 to 100 times (w/w) with isopropyl alcohol.

It is known that silver nanocrystals have a characteristic spectral characteristic called plasmon absorption in the visible absorption spectrum region, and the position of the absorption band is highly affected by shape anisotropy. Since silver nanowires or silver nanorods have an absorption maximum ($\lambda_{max}$) around the wavelength of 370 nm, whereas the plasmon absorption band of spherical silver nanoparticles as reaction foreign matter have an absorption band of around 400 nm to 500 nm, a high or low yield of the silver nanowires can be determined by the absorption spectrum of the reaction solution.

When the reaction temperature was 150°C (Example 2-1, Figure 1(a)), the absorption peak at 370 nm was relatively weak as compared with the absorption peaks at 400 to 500 nm, whereas when the reaction temperature was raised (the reaction temperature: 165°C (Example 2-3), the reaction temperature: 170°C (Example 2-4), Figure 1(b)), the absorption peaks at 400 to 500 nm were reduced and the peak intensity at 370 nm strongly appeared, so that it was demonstrated that a high reaction temperature tends to increase the production yield of silver nanowires.

On the other hand, it was demonstrated that a low reaction temperature tends to result in a small wire diameter, as shown in Table 1.

[Table 1]

Table 1

| | Production conditions | | | | |
|---|---|---|---|---|---|
| | Reaction temperature | Ag/Br increasing rate [min$^{-1}$] | Silver ion concentration of mixed solution [mmol/kg] | Chloride ion concentration of mixed solution [ppm by mass] | Pentagonal dipyramidal/elongated pentagonal dipyramidal silver bromide crystals |
| Ex. 2-1 | 150°C | 2.87 | 1.44 | 1.5 or less | formed |
| Ex. 2-2 | 155°C | 2.87 | 1.44 | 1.5 or less | formed |
| Ex. 1 | 160°C | 2.87 | 1.44 | 1.5 or less | formed |
| Ex. 2-3 | 165°C | 2.87 | 1.28 | 1.5 or less | formed |
| Ex. 2-4 | 170°C | 2.87 | 0.58 | 1.5 or less | formed |

Table 1 (continued)

|  | Silver nanowires | | |
|---|---|---|---|
|  | Average wire diameter (standard deviation) | Average wire length (standard deviation) | Absorption evaluation value |
| Ex. 2-1 | 13.8 nm (σ = 1.6 nm) | 16.1 μm (σ = 9.0 μm) | 0.809 |
| Ex. 2-2 | 13.0 nm (σ = 1.5 nm) | 11.5 μm (σ = 5.2 μm) | 0.581 |
| Ex. 1 | 13.7 nm (σ = 1.5 nm) | 10.5 μm (σ = 4.0 μm) | 0.558 |
| Ex. 2-3 | 15.1 nm (σ = 2.0 nm) | 11.7 μm (σ = 4.8 μm) | 0.414 |
| Ex. 2-4 | 16.1 nm (σ = 3.1 nm) | 11.1 μm (σ = 4.4 μm) | 0.337 |

[Examples 3-1 to 3-4]

In Example 3-1, a silver nanowire dispersion was produced in the same manner as in Example 1, except that the reaction temperature was changed to 150°C. (That is, the above Example 2-1 is cited as Example 3-1.)

In Example 3-2, a silver nanowire dispersion was produced in the same manner as in Example 1, except that the dropwise addition time was changed to 740 minutes and the reaction temperature was changed to 150°C.

The above Example 1 is cited as Example 3-3.

In Example 3-4, a silver nanowire dispersion was produced in the same manner as in Example 1, except that the dropwise addition time was changed to 740 minutes.

Table 2 shows, for example, the silver ion concentrations of the mixed solutions in Examples 3-1 to 3-4 and the evaluation results of the silver nanowires.

These evaluation results show that the silver ion concentration of the mixed solution can be controlled by controlling the rate of dropwise addition of the silver nitrate solution, that is, the charging speed of silver ions, thereby producing silver nanowires having a small wire diameter and controlling the yield of silver nanowires.

[Table 2]

Table 2

| | Production conditions | | | | | |
|---|---|---|---|---|---|---|
| | Reaction temperature | Addition time of silver nitrate solution [min] | Ag/Br increasing rate [min$^{-1}$] | Silver ion concentration of mixed solution [mmol/kg] | Chloride ion concentration of mixed solution [ppm by mass] | Pentagonal dipyramidal/ elongated pentagonal dipyramidal silver bromide crystals |
| Ex. 3-1 | 150°C | 516 | 2.87 | 1.44 | 1.5 or less | formed |
| Ex. 3-2 | 150°C | 740 | 2.01 | 1.89 | 1.5 or less | formed |
| Ex. 3-3 | 160°C | 516 | 2.87 | 1.44 | 1.5 or less | formed |
| Ex. 3-4 | 160°C | 740 | 2.01 | 0.88 | 1.5 or less | formed |

Table 2 (continued)

| | Silver nanowires | | |
|---|---|---|---|
| | Average wire diameter (standard deviation) | Average wire length (standard deviation) | Absorption evaluation value |
| Ex. 3-1 | 13.8 nm (σ = 1.6 nm) | 16.1 μm (σ = 9.0 μm) | 0.809 |
| Ex. 3-2 | 14.8 nm (σ = 1.9 nm) | 11.5 μm (σ = 5.2 μm) | 0.863 |
| Ex. 3-3 | 13.7 nm (σ = 1.5 nm) | 10.5 μm (σ = 4.0 μm) | 0.558 |
| Ex. 3-4 | 15.1 nm (σ = 1.9 nm) | 10.8 μm (σ = 4.8 μm) | 0.381 |

[Examples 4-1 to 4-5]

In Example 4-1, a silver nanowire dispersion was produced in the same manner as in Example 1, except that tetrabutylammonium bromide was changed to potassium bromide (1.2 mmol).

In Example 4-2, a silver nanowire dispersion was produced in the same manner as in Example 1, except that tetrabutylammonium bromide was changed to lithium bromide (1.2 mmol).

In Example 4-3, a silver nanowire dispersion was produced in the same manner as in Example 1, except that tetrabutylammonium bromide was changed to sodium bromide (1.2 mmol) .

In Example 4-4, a silver nanowire dispersion was produced in the same manner as in Example 1, except that tetrabutylammonium bromide was changed to tetraethylammonium bromide (1.2 mmol).

In Example 4-5, a silver nanowire dispersion was produced in the same manner as in Example 1, except that tetrabutylammonium bromide was changed to tetramethylammonium bromide (1.2 mmol).

Table 3 shows, for example, the silver ion concentrations of the mixed solutions in Examples 4-1 to 4-5 and the evaluation results of the silver nanowires. The proportion of chloride ions in halide ions in the bromide solution was calculated based on the amount of chloride ions that may be contained in the raw material, and found to be 2.3 mol% or less, in any of Examples 4-1 to 4-5.

[Table 3]

Table 3

| | | Production conditions | | | | |
|---|---|---|---|---|---|---|
| | Bromide | Reaction temperature | Ag/Br increasing rate [min$^{-1}$] | Silver ion concentration of mixed solution [mmol/kg] | Chloride ion concentration of mixed solution [ppm by mass] | Pentagonal dipyramidal/ elongated pentagonal dipyramidal silver bromide crystals |
| Ex. 4-1 | Potassium bromide | 160°C | 2.87 | 1.43 | 1.5 or less | formed |
| Ex. 4-2 | Lithium bromide | 160°C | 2.87 | 1.41 | 1.5 or less | formed |
| Ex. 4-3 | Sodium bromide | 160°C | 2.87 | 1.43 | 1.5 or less | formed |
| Ex. 4-4 | Tetraethylammonium bromide | 160°C | 2.87 | 1.42 | 1.5 or less | formed |
| Ex. 4-5 | Tetramethylammonium bromide | 160°C | 2.87 | 1.42 | 1.5 or less | formed |

Table 3 (continued)

| | Silver nanowires | | |
|---|---|---|---|
| | Average wire diameter (standard deviation) | Average wire length (standard deviation) | Absorption evaluation value |
| Ex. 4-1 | 14.3 nm ($\sigma$ = 2.0 nm) | 10.8 μm ($\sigma$ = 4.2 μm) | 0.570 |
| Ex. 4-2 | 13.4 nm ($\sigma$ = 1.6 nm) | 9.8 μm ($\sigma$ = 3.3 μm) | 0.578 |
| Ex. 4-3 | 13.5 nm ($\sigma$ = 1.9 nm) | 11.2 μm ($\sigma$ = 4.5 μm) | 0.556 |
| Ex. 4-4 | 13.7 nm ($\sigma$ = 1.2 nm) | 10.6 μm ($\sigma$ = 4.2 μm) | 0.548 |
| Ex. 4-5 | 13.9 nm ($\sigma$ = 1.7 nm) | 8.2 μm ($\sigma$ = 3.6 μm) | 0.560 |

As shown in Table 3, various halogen compounds that are dissociable in the reaction solution can be used in the present invention.

[Comparative Examples 4-1 to 4-5]

In Comparative Example 4-1, a silver nanowire dispersion was produced in the same manner as in Example 1, except that tetrabutylammonium bromide was changed to 1.2 mmol of tetraethylammonium chloride (manufactured by Tokyo Kasei Kogyo Co., Ltd.).

In Comparative Example 4-2, a silver nanowire dispersion was produced in the same manner as in Comparative Example 4-1, except that the reaction temperature was changed to 150°C.

In Comparative Example 4-3, a silver nanowire dispersion was produced in the same manner as in Example 1, except that 1.2 mmol of tetrabutylammonium bromide was changed to 1.2 mmol in total of a mixture of tetraethylammonium chloride (manufactured by Tokyo Kasei Kogyo Co., Ltd.) and tetraethylammonium bromide (manufactured by Tokyo Kasei Kogyo Co., Ltd.) (tetraethylammonium chloride:tetraethylammonium bromide = 8:2 (molar ratio)), the reaction temperature was changed to 150°C, and the rate of dropwise addition of the silver nitrate solution was changed such that the Ag/halogen increasing rate was the value described in Table 3.

In Comparative Example 4-4, a silver nanowire dispersion was produced in the same manner as in Example 1, except that 1.2 mmol of tetrabutylammonium bromide was changed to 1.2 mmol in total of a mixture of tetraethylammonium chloride (manufactured by Tokyo Kasei Kogyo Co., Ltd.) and tetraethylammonium bromide (manufactured by Tokyo Kasei Kogyo Co., Ltd.) (tetraethylammonium chloride:tetraethylammonium bromide = 8:2 (molar ratio)), the reaction temperature was further changed to 150°C, and the rate of dropwise addition of the silver nitrate solution was changed such that the Ag/halogen increasing rate was the value described in Table 3.

In Comparative Example 4-5, a silver nanowire dispersion was produced in the same manner as in Example 1, except that 1.2 mmol of tetrabutylammonium bromide was changed to 1.2 mmol in total of a mixture of tetraethylammonium chloride (manufactured by Tokyo Kasei Kogyo Co., Ltd.) and tetraethylammonium bromide (manufactured by Tokyo Kasei Kogyo Co., Ltd.) (tetraethylammonium chloride:tetraethylammonium bromide = 8:2 (molar ratio)), and the reaction temperature was further changed to 150°C.

Table 4 shows, for example, the silver ion concentrations of the mixed solutions in Comparative Examples 4-1 to 4-5, the shape of the silver halide crystals formed in the mixed solutions, and the evaluation results of the silver nanowires.

In any of Comparative Examples 4-1 to 4-5, no silver halide crystals in the shape of a pentagonal dipyramid and/or an elongated pentagonal dipyramid were formed in the mixed solution, and thin silver nanowires were not able to be obtained.

The amount of chlorine in the silver nanowires produced in Comparative Example 4 was 0.22% by mass, and the amount of bromine was 0.99% by mass.

[Table 4]

Table 4

| | Production conditions | | | | |
|---|---|---|---|---|---|
| | Halogen compound (molar ratio) | Reaction temperature | Ag/halogen increasing rate [min⁻¹] | Silver ion concentration of mixed solution [mmol/kg] | Crystals in early stage of reaction |
| Comp. Ex. 4-1 | Tetraethylammonium chloride | 160°C | 2.87 | 1.77 | Rounded crystals |
| Comp. Ex. 4-2 | Tetraethylammonium chloride | 150°C | 2.87 | 1.76 | Rounded crystals |
| Comp. Ex. 4-3 | Tetraethylammonium chloride/tetraethylammonium bromide-8/2 | 150°C | 11.36 | 3.16 | Cubic polycrystals |
| Comp. Ex. 4-4 | Tetraethylammonium chloride/tetraethylammonium bromide-8/2 | 150°C | 5.68 | 2.78 | Cubic polycrystals |
| Comp. Ex. 4-5 | Tetraethylammonium chloride/tetraethylammonium bromide-8/2 | 150°C | 2.87 | 1.77 | Cubic polycrystals |

Table 4 (continued)

| | Silver nanowires | | |
|---|---|---|---|
| | Average wire diameter (standard deviation) | Average wire length (standard deviation) | Absorption evaluation value |
| Comp. Ex. 4-1 | 31.0 nm (σ = 2.9 nm) | 11.0 μm (σ = 5.1 μm) | 0.330 |
| Comp. Ex. 4-2 | 29.6 nm (σ = 2.2 nm) | 11.6 μm (σ = 4.6 μm) | 0.324 |
| Comp. Ex. 4-3 | 19.8 nm (σ = 1.2 nm) | 12.6 μm (σ = 5.4 μm) | 0.153 |
| Comp. Ex. 4-4 | 20.1 nm (σ = 1.1 nm) | 12.1 μm (σ = 4.3 μm) | 0.170 |
| Comp. Ex. 4-5 | 21.9 nm (σ = 2.5 nm) | 12.7 μm (σ = 6.1 μm) | 0.202 |

[Test Example 1]

The same operation as Example 1 was started, except that 1.2 mmol of tetrabutylammonium bromide was changed to 1.2 mmol in total of a mixture of tetraethylammonium chloride and tetraethylammonium bromide (molar ratio (tetraethylammonium chloride:tetraethylammonium bromide = 8:2)), dropwise addition of the silver nitrate solution was ended at the time when silver atom:halogen atom (molar ratio) = 1.1:1 was achieved in the reaction solution, and 10 ml was taken out from the solution that was held for 30 minutes after the end of dropwise addition. The crystals in the solution were analyzed in the same manner as in, for example, Example 1. Table 5 shows the results with the analysis results of Example 1 and Comparative Example 4-1.

Figures 2(a), (b), and (c) show FE-SEM images of the crystals in the early stage of the reaction obtained in Example 1, Comparative Example 4-1, or Test Example 1.

[Table 5]

Table 5

|  | Halogen compound (molar ratio) | Shape of silver halide crystals | Average diameter of silver nanowires in early stage of generation |
|---|---|---|---|
| Example 1 | Tetrabutylammonium bromide | Pentagonal dipyramid and/or elongated pentagonal dipyramid | 12.5 nm |
| Comparative Example 4-1 | Tetraethylammonium chloride | Rounded polyhedron | 27.5 nm |
| Test Example 1 | Tetraethylammonium chloride/ tetraethylammoni um bromide mixture (8:2) | cubic | 16.8 nm |

For the compositions of the crystals described in Table 5, the presence of silver and halogen (chlorine and bromine) atoms were demonstrated in the measurement by the above-mentioned method, and the crystals were demonstrated to be constituted by silver and halogen atoms. Therefore, it is inferred that crystals are formed in the form of silver halide in the early stage of the production of silver nanowires, and silver nanowires are formed from the crystals as starting points.

Figure 3 shows FE-SEM images of the crystals in the early stage of the reaction in Example 1 ((a) 160°C) and Example 2-1 ((b) 150°C).

From the results of Test Example 1 and the results of, for example, Example 1, a reduction in the diameter of silver nanowires is inferred to be highly affected by the shape of the crystals in the early stage of the reaction of silver halide that is produced in the early stage of the production of silver nanowires.

[Example 5]

(Preparation of thin film)

An aqueous silver nanowire dispersion was prepared by changing methanol to pure water in the process of preparing a purified methanol-diluted solution of silver nanowires for measuring the wire diameter mentioned above. To about 10 g of the aqueous silver nanowire dispersion, a film-forming binder resin (hydroxypropyl methylcellulose, manufactured by Shin-Etsu Chemical Co., Ltd., METOLOSE 65SH-50) was added in an amount corresponding to the solid mass (about 50 mg) of the aqueous silver nanowire dispersion and well-mixed to obtain a thin film-forming dispersion. About 0.5 mL of the thin film-forming dispersion was collected on near 1 cm from the upper end of a COP film (manufactured by ZEON CORPORATION, ZEONOR (R), 10 cm × 25 cm), and coated on the COP film using a #10 bar coater. After coating, the film was dried in a hot air circulating oven at 100°C for 2 minutes to obtain a COP film attached with a silver nanowire thin film. As silver nanowires, three types of silver nanowires: the silver nanowires produced in Example 2-1, the silver nanowires produced in Example 2-4, and silver nanowires having a wire diameter of about 20 to 27 nm produced by a conventionally known method were used.

(Evaluation of thin film)

The evaluation of the thin film was performed as follows.

<<Measurement of electrical resistivity>>

For the COP film attached with a silver nanowire thin film prepared by the above method, the surface resistivity ($\Omega/\square$) of the silver nanowire thin film was measured using Loresta-GP MCP-T610, a low resistivity meter (manufactured by Mitsubishi Chemical Corporation) in accordance with JIS K7194 "Testing method for resistivity of conductive plastics with a four-point probe array". The surface resistivity (sheet resistance) was 50 $\Omega/\square$ in any silver nanowire thin films.

<<Measurement of haze>>

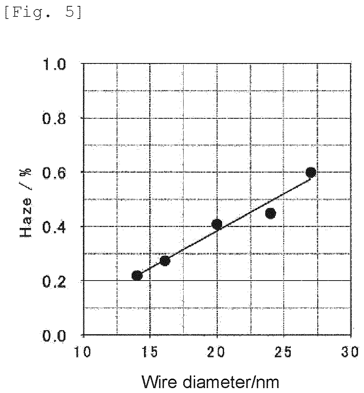

The COP film attached with a silver nanowire thin film prepared by the above method was attached to the sample holder of NDH4000 haze meter manufactured by NIPPON DENSHOKU INDUSTRIES Co., Ltd., and the haze was measured in accordance with JIS K7136. Figure 5 shows a correlation between the average wire diameter and the haze. It was demonstrated that the haze decreases as the average wire diameter becomes small.

## Claims

1.    A method for producing silver nanowires, comprising:
a step of adding a raw material solution (A) comprising silver ions and a solvent (a) to a raw material solution (B) comprising halide ions and a solvent (b), the halide ions including substantially no chloride ions, and 97.0 mol% or more of the halide ions being bromide ions, so as to include a period where a value of (a rate of addition of the raw material solution (A) in terms of a rate of addition of silver ions [mol/min])/(an amount of halide ions in the raw material solution (B) [mol]) $\times$ 100 is 6.0 [min$^{-1}$] or less, thereby forming silver nanowires in an obtained mixed solution substantially containing no chloride ions.

2.    The method for producing silver nanowires according to claim 1, wherein a silver ion concentration in the mixed solution within 120 minutes from a start of addition of the raw material solution (A) is 2.5 mmol/kg or less.

3.    The method for producing silver nanowires according to claim 1 or 2, wherein each of the solvent (a) and the solvent (b) is a polyol, and the polyol is at least one selected from the group consisting of ethylene glycol, propylene glycol, trimethylene glycol, and glycerin.

4.    The method for producing silver nanowires according to any one of claims 1 to 3, wherein the raw material solution (A) and/or the raw material solution (B) contains a polymer including a structural unit derived from N-vinylpyrrolidone.

5.    The method for producing silver nanowires according to any one of claims 1 to 4, wherein the silver ions are those dissociated from a silver compound in the solvent (a).

6.    The method for producing silver nanowires according to claim 5, wherein the silver compound is at least one selected from the group consisting of silver nitrate, silver hexafluorophosphate, silver tetrafluoroborate, silver carbonate, silver sulfate, silver acetate, and silver trifluoroacetate.

7.    The method for producing silver nanowires according to any one of claims 1 to 6, wherein the halide ions are those dissociated from a halide in the solvent (b).

8.    The method for producing silver nanowires according to claim 7, wherein the halide is at least one selected from the group consisting of a quaternary ammonium halide and a metal halide.

9.    Silver nanowires produced by the method according to any one of claims 1 to 8.

10.  A thin film comprising the silver nanowires according to claim 9, the thin film having a haze measured in accordance with JIS K7136 of 0.3% or less.

[Fig. 1]

(a) 150-160 °C reaction

— 150 °C (Example 2-1)
---- 160 °C (Example 1)

(b) 165-170 °C reaction

— 165 °C (Example 2-3)
---- 170 °C (Example 2-4)

[Fig. 2]

(a) (Example 1)     (b) (Comparative Example 4-1)     (c) (Test Example 1)

[Fig. 3]

(a) 1 6 0 °C (Example 1)     (b) 1 5 0 °C (Example 2-1)

[Fig. 4]

(a)

## Example 1

(b)

## Example 2-4

(c)

## Example 3-4

[Fig. 5]

| **INTERNATIONAL SEARCH REPORT** | International application No. |
|---|---|
| | PCT/JP2021/024656 |

**A. CLASSIFICATION OF SUBJECT MATTER**
Int.Cl. B22F9/24(2006.01)i, B82Y30/00(2011.01)i, B82Y40/00(2011.01)i,
B82Y99/00(2011.01)i, H01B5/00(2006.01)i, H01B5/14(2006.01)i,
H01B13/00(2006.01)i, B22F1/00(2006.01)i
FI: B22F9/24E, B22F1/00K, H01B5/14A, H01B13/00501Z, H01B5/00H, B82Y30/00,
B82Y99/00, B82Y40/00
According to International Patent Classification (IPC) or to both national classification and IPC

**B. FIELDS SEARCHED**

Minimum documentation searched (classification system followed by classification symbols)
Int.Cl. B22F1/00, B22F9/24, B82Y30/00, B82Y40/00, B82Y99/00, H01B5/00,
H01B5/14, H01B13/00

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2016/0082418 A1 (GEORGIA TECH RESEARCH CORPORATION) 24 March 2016 (2016-03-24) | 1-10 |
| A | US 2016/0114395 A1 (KOOKMIN UNIVERSITY INDUSTRY ACADEMY COOPERATION FOUNDATION) 28 April 2016 (2016-04-28) | 1-10 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 August 2021 | 14 September 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | International application No. |
| Information on patent family members | PCT/JP2021/024656 |

```
US 2016/0082418 A1 24 March 2016        US 2018/0050324 A1

US 2016/0114395 A1 28 April 2016        (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7585349 B

- WO 201757326 A